# EUROPÄISCHE PATENTSCHRIFT

(11) **EP 0 978 719 B1**
(45) Veröffentlichungstag und Bekanntmachung des Hinweises auf die Patenterteilung: **04.04.2007**
(21) Anmeldenummer: 98114779.6
(22) Anmeldetag: 06.08.1998
(51) Int. Cl.: G01N 21/91

(54) **Verfahren zum Nachweis von Oberflächenfehlern in Werkstoffoberflächen**
Method for detection of surface defects on material surfaces
Procédé pour la détection des défauts de surface sur des surfaces de materiaux

(43) Veröffentlichungstag der Anmeldung: 09.02.2000
(73) Patentinhaber: Helmut Klumpf Techn. Chemie Kommanditgesellschaft, 45699 Herten (DE)
(72) Erfinder: Klumpf, Helmut, 45699 Herten (DE)
(74) Vertreter: Rohmann, Michael

(56) Entgegenhaltungen:
- GB-A- 1 388 531
- US-A- 3 489 898
- US-A- 3 557 015
- US-A- 3 636 759
- US-A- 3 904 545

## Beschreibung

Die Erfindung betrifft ein Verfahren zum Nachweis von Oberflächenfehlern in Werkstoffoberflächen, insbesondere in Werkstoffoberflächen von metallischen Werkstoffen. - Oberflächenfehler meint insbesondere Risse, Überlappungen, Falten, Poren und Bindefehler, die zur Werkstoffoberfläche hin offen sind. Metallische Werkstoffe meint im Rahmen der Erfindung insbesondere Werkstoffe wie Stahlguss, Grauguss, Druckguss sowie legierte und unlegierte Stähle, Leichtmetalle und Buntmetalle. Das erfindungsgemäße Verfahren ist jedoch grundsätzlich auch für nichtmetallische Werkstoffe bzw. keramische Werkstoffe und Kunststoffe anwendbar.

Bei dem bekannten Verfahren der eingangs genannten Art, von dem die Erfindung ausgeht (DIN 54 152, Teil 1) muss zunächst die Werkstoffoberfläche zwingend vorgereinigt werden. Dabei findet einerseits eine mechanische Vorreinigung statt, bei der insbesondere Rost und Schmutz von der Werkstoffoberfläche entfernt werden. Andererseits findet aber auch eine chemische Vorreinigung statt, bei der insbesondere Öl- und Fettrückstände entfernt werden. Bei der chemischen Vorreinigung werden beispielsweise Entfettungsmittel und Beizmittel eingesetzt. Bei der Vorreinigung soll vor allem erreicht werden, dass in den Oberflächenfehlern, d. h. beispielsweise in Rissen der Werkstoffoberfläche, kein Schmutz, Öl, Fett und dergleichen verbleibt. Nach der Vorreinigung, die regelmäßig auch mit flüssigen Reinigungsmitteln stattfindet, ist bei dem bekannten Verfahren zwingend eine nachgeschaltete Trocknung der Werkstoffoberfläche erforderlich. Erst daraufhin wird ein Eindringmittel auf die Werkstoffoberfläche aufgebracht, das in die Oberflächenfehler eindringen soll. Das Eindringmittel besteht dabei aus einem Farbstoff oder einem fluoreszierenden Stoff sowie aus einem Lösemittel mit verhältnismäßig hohem Siedepunkt. Ein hoher Siedepunkt des Lösemittels ist deshalb erforderlich, weil ein Eintrocknen bzw. Antrocknen des Eindringmittels während des Eindringens in die Oberflächenfehler zwingend vermieden werden soll. Das bei dem bekannten Verfahren eingesetzte Eindringmittel muss einen Flammpunkt oberhalb 60° C aufweisen. Die Eindringdauer des Eindringmittels liegt in der Regel zwischen 5 und 30 Minuten, wobei die Eindringdauer zwingend so eingehalten werden muss, dass das genannte Eintrocknen des Eindringmittels nicht stattfindet. Um dieses Eintrocknen zu vermeiden kann bei dem bekannten Verfahren die Prüftemperatur bzw. die Werkstoffoberflächentemperatur höchstens 50° C betragen. - Nach dem Eindringen des Eindringmittels in die Oberflächenfehler findet eine Zwischenreinigung der Werkstoffoberfläche statt. Nach einer erneuten Trocknung der Werkstoffoberfläche wird der Entwickler auf die Werkstoffobertläche aufgebracht und anschließend findet eine Lichtinspektion der Werkstoffoberfläche statt. Lichtinspektion meint, dass die mit Hilfe des Entwicklers markierten Oberflächenfehler unter Lichteinwirkung, vorzugsweise bei Tageslicht oder unter UV-Licht, begutachtet werden. Auch in US 3 636 759 ist ein Verfahren beschrieben, das die oben beschriebenen Verfahrensschritte aufweist. Nach dem Auftragen des Eindringmittels auf eine saubere Oberfläche dringt das Eindringmittel in die Oberflächenfehler ein. Vor dem Eintrocknen wird die vom Eindringmittel bedeckte Oberfläche einem Zwischenwaschgang unterzogen, indem das auf die Oberfläche aufgetragene Eindringmittel abgewaschen wird. Nach einer erneuten Trocknung kann zur Verbesserung der Oberflächeninspektion ein Entwickler aufgetragen werden, der das in den Oberflächenfehlern befindliche Eindringmittel, durch Kapillarkräfte getrieben, an die Oberfläche befördert. Die Inspektion der Oberflächenfehler erfolgt ebenfalls nach Abhängigkeit des gewählten Eindringmittels unter sichtbarem oder UV-Licht. - Die vorstehend beschriebenen bekannten Verfahren zeichnen sich durch eine nachteilhaft aufwendige Verfahrensweise aus. Zunächst muss eine aufwendige Vorreinigung der Werkstoffoberfläche durchgeführt werden, bei der dafür gesorgt werden muss, dass auch die Oberflächenfehler, beispielsweise Risse, von Verunreinigungen weitgehend frei sind. Daran schließt sich eine aufwendige Trocknung der Werkstoffoberfläche an. Fernerhin ist insbesondere beim Aufbringen des Eindringmittels die Prüftemperatur nach oben hin begrenzt, um ein Eintrocknen des Eindringmittels zu vermeiden. Die im Rahmen der bekannten Verfahren bei der Lichtinspektion erzielten Anzeigeergebnisse lassen ebenfalls zu wünschen übrig. Oftmals können die Anzeigeergebnisse und somit die Oberflächenfehler mit bloßem Auge nicht ohne weiteres erkannt werden. Dann müssen Hilfsmittel, wie Vergrößerungsgeräte oder kontrastverbessernde Brillen herangezogen werden, was ebenfalls aufwendig ist. Es kommt häufig vor, dass einige Oberflächenfehler, insbesondere Oberflächenfehler mit geringen Dimensionen kaum oder gar nicht erkannt werden können.

Demgegenüber liegt der Erfindung das technische Problem zugrunde, ein Verfahren der eingangs genannten Art anzugeben, mit dem die oben aufgeführten Nachteile vermieden werden, das sich insbesondere durch einfache, wenig aufwendige Maßnahmen auszeichnet und mit dem nichtsdestoweniger ausgezeichnete Anzeigeergebnisse erzielt werden.

Zur Lösung dieses technischen Problems lehrt die Erfindung ein Verfahren zum Nachweis von Oberflächenfehlern in Werkstoffoberflächen, insbesondere in Werkstoffoberflächen von metallischen Werkstoffen,
wobei anschließend die Werkstoffoberfläche getrocknet wird,
wobei daraufhin eine Zwischenreinigung der Werkstoffoberfläche mit zumindest einem flüssigen Reinigungsmittel durchgeführt wird und wobei anschließend die Werkstoffoberfläche erneut getrocknet wird,
wobei danach zumindest ein Entwickler auf die Werkstoffoberfläche aufgebracht wird und wobei anschließend eine Lichtinspektion der Werkstoffoberfläche durchgeführt wird,
dadurch gekennzeichnet dass wobei ein Eindringmittel auf die Werkstoffoberfläche aufgebracht wird, die Werkstoffoberfläche ohne chemische Vorreinigung behandelt wird, so das Verunreinigungen in den Oberflächenfehlern verbleiben, und das Eindringmittel auf die ungereinigte Werkstoffoberfläche aufgebracht wird, so dass in den Oberflächenfehlern verbleibende Verunreinigungen von dem Eindringmittel durchsetzt werden.

Ungereinigte Werkstoffoberfläche meint im Rahmen der Erfindung insbesondere, dass vor allem Verunreinigungen in den Oberflächenfehlern nicht entfernt werden. Insoweit wird erfindungsgemäß nicht mit einer chemischen Vorreinigung gearbeitet, um Öle und/oder Fette oder ähnliche Verunreinigungen aus den Oberflächenfehlern zu entfernen. Auch Schmutzpartikel oder Rostpartikel und dergleichen sollen erfindungsgemäß insbesondere in den Oberflächenfehlern verbleiben. Es liegt jedoch im Rahmen der Erfindung, dass größere Teilbereiche der Werkstoffoberfläche bedeckende Verunreinigungen lediglich grob mechanisch entfernt werden.

Nach bevorzugter Ausführungsform der Erfindung wird ein Farb-Eindringmittel und/oder ein fluoreszierendes Eindringmittel eingesetzt. Es liegt auch im Rahmen der Erfindung, ein fluoreszierendes Farb-Eindringmittel zu verwenden. Vorzugsweise besteht das Eindringmittel im Wesentlichen aus zumindest einem Lösemittel und zumindest einem Farbstoff und/oder einem fluoreszierenden Stoff. Dabei weist das Eindringmittel bevorzugt 90 bis 99 Gew.-% des Lösemittels sowie 0,5 bis 5 Gew.-% des Farbstoffes und/oder fluoreszierenden Stoffes auf. Es liegt im Rahmen der Erfindung, dass das Eindringmittel fernerhin 0 bis 1 Gew.-% eines Tensides enthält. Als Lösemittel werden bevorzugt leicht flüchtige Alkohole wie Ethanol oder n-Propanol eingesetzt. Es versteht sich, dass bei Verwendung der letztgenannten Lösemittel Farbstoffe bzw. fluoreszierende Stoffe eingesetzt werden müssen, die in Alkohol löslich sind.

Nach bevorzugter Ausführungsform der Erfindung werden als Farbstoffe Lebensmittelfarbstoffe eingesetzt. Es liegt im Rahmen der Erfindung, Xanten-Farbstoffe und/oder Erythrosin als Farbstoff einzusetzen. Nach Aufbringen des Eindringmittels dringt das Eindringmittel in die Oberflächenfehler ein, die zur Werkstoffoberfläche hin offen sind. Dabei transportiert das Lösemittel des Eindringmittels die gelösten Farbstoffe bzw. die gelösten fluoreszierenden Stoffe in die vorhandenen Oberflächenfehler. Anschließend findet die Trocknung der Werkstoffoberfläche statt. Trocknung der Werkstoffoberfläche meint hier, dass im Gegensatz zu den eingangs beschriebenen bekannten Maßnahmen ein Antrocknen bzw. Eintrocknen des Eindringmittels zugelassen wird. Mit anderen Worten lässt man das Lösemittel des Eindringmittels verdunsten und die Farbstoffe und/oder die fluoreszierenden Stoffe verbleiben in den Oberflächenfehlern. Es liegt auch im Rahmen der Erfindung, das Antrocknen bzw. Eintrocknen des Eindringmittels durch Erwärmung und/oder durch einen Luftstrom zu unterstützen bzw. zu beschleunigen. Da ein Eintrocknen des Eindringmittels erfindungsgemäß erwünscht ist, kann vorzugsweise ein Eindringmittel verwendet werden, dessen Flammpunkt im Gegensatz zu dem eingangs beschriebenen bekannten Verfahren unterhalb von 60° C liegt. Das Eindringmittel kann somit bevorzugt auch ein Lösemittel mit niedrigem Siedepunkt aufweisen. Auf diese Weise wird das Eintrocknen bzw. die Verdunstung des Lösemittels beschleunigt. Es liegt auch im Rahmen der Eindung, dass im Gegensatz zu den bekannten Maßnahmen das Verfahren bis zu Temperaturen von 100° C und auch noch bei höheren Temperaturen durchführbar ist. Die Prüftemperatur bzw. die Werkstoffoberflächentemperatur kann also ohne weiteres oberhalb von 50° C liegen. Die höheren Temperaturen unterstützen auf effektive Weise das Eintrocknen des Eindringmittels.

Im Anschluss an die vorstehend beschriebene Trocknung der Werkstoffoberfläche findet eine Zwischenreinigung der Werkstoffoberfläche mit zumindest einem flüssigen Reinigungsmittel statt. Die Zwischenreinigung dient dazu, das Eindringmittel von der Werkstoffoberfläche zu entfernen. Allerdings soll erfindungsgemäß das Eindringmittel möglichst vollständig in den Oberflächenfehlern der Werkstoffoberfläche verbleiben. Vorzugsweise wird zur Zwischenreinigung der Werkstoffoberfläche Wasser und/oder zumindest ein Lösemittel als flüssiges Reinigungsmittel verwendet. Als Reinigungsmittel können beispielsweise Alkohole und/oder Ketone eingesetzt werden. Es liegt auch im Rahmen der Erfindung, ein Alkohol-Wasser-Gemisch als Reinigungsmittel zu verwenden. Fernerhin kann ein Emulgator bei der Zwischenreinigung eingesetzt werden. - Im Anschluss an die Zwischenreinigung findet eine erneute Trocknung der Werkstoffoberfläche statt. Diese Trocknung kann durch Verdunstung des Reinigungsmittels bei Umgebungstemperatur stattfinden. Es liegt jedoch auch im Rahmen der Erfindung, die Trocknung bei erhöhter Temperatur durchzuführen und/oder die Trocknung durch einen Luftstrom zu unterstützen.

Im Anschluss an die erneute Trocknung der Werkstoffoberfläche wird der Entwickler auf die Werkstoffoberfläche aufgebracht. Vorzugsweise wird der Entwickler dabei auf die Werkstoffoberfläche, bevorzugt mit Hilfe einer Spritzpistole oder einer Spraydose, aufgesprüht. Der Entwickler dient dazu, den in den Oberflächenfehlern verbliebenen Farbstoff und/oder fluoreszierenden Stoff sichtbar zu machen bzw. einer Lichtinspektion zugänglich zu machen. Es liegt im Rahmen der Erfindung, dass auf der Werkstoffoberfläche eine Entwicklerschicht ausgebildet wird, in der vorzugsweise farbige Markierungen der Oberflächenfehler vorliegen und der Lichtinspektion zugänglich sind. Als Entwickler wird vorzugsweise eine Lösung und/oder eine Suspension aus Wasser und/oder aus zumindest einem Lösemittel und aus zumindest einem anorganischen Weißpigment eingesetzt. Zweckmäßigerweise besteht der Entwickler zu 80 bis 95 Gew.-% aus Wasser und/oder zumindest einem Lösemittel sowie zu 5 bis 20 Gew.-% aus zumindest einem anorganischen Weißpigment. Als Lösemittel können beispielsweise Ethanol und/oder n-Propanol eingesetzt werden. Als anorganisches Weißpigment wird bevorzugt Talkum und/oder Magnesiumcarbonat und/oder Titandioxid und/oder entsprechende Silikate eingesetzt. Der Entwickler kann auch in Form einer Suspension aus Wasser und 5 bis 20 Gew.-% anorganischem Weißpigment vorliegen.

Nach dem Aufbringen des Entwicklers findet die Prüfung der Werkstoffoberfläche bzw. die Lichtinspektion der Werkstoffoberfläche statt. Vorzugsweise wird die Lichtinspektion bei Tageslicht und/oder unter UV-Strahlung durchgeführt. Tageslicht meint auch künstliches Licht vergleichbarer Wellenlänge. Wenn als Eindringmittel ausschließlich Farb-Eindringmittel verwendet wurde, findet die Lichtinspektion bevorzugt bei Tageslicht statt. Wenn als Eindringmittel ausschließlich ein fluoreszierendes Eindringmittel eingesetzt wurde, wird die Lichtinspektion zweckmäßigerweise unter UV-Strahlung durchgeführt. Bei der Lichtinspektion werden die Oberflächenfehler in der Regel als farbige Markierungen, beispielsweise farbige Linien, sichtbar. - Es liegt im übrigen im Rahmen der Erfindung, die Auftragung des Entwicklers zu wiederholen.

Der Erfindung liegt die Erkenntnis zugrunde, dass auf einfache und wenig aufwendige Weise eine zuverlässige und gut sichtbare Markierung der Oberflächenfehler erreicht werden kann, wenn die erfindungsgemäße Lehre verwirklicht wird. Zunächst weist das erfindungsgemäße Verfahren gegenüber den eingangs erläuterten bekannten Maßnahmen weniger Arbeitsschritte bzw. weniger aufwendige Arbeitsschritte auf. Insbesondere wird erfindungsgemäß auf eine aufwendige Vorreinigung der Werkstoffoberfläche verzichtet. Außerdem muss im Vergleich zu den bekannten Maßnahmen nicht in aufwendiger Weise darauf geachtet werden, dass ein Eintrocknen des Eindringmittels vermieden wird. Vielmehr ist erfindungsgemäß das Antrocknen des Eindringmittels erforderlich. Bei dem eingangs beschriebenen bekannten Verfahren sind relativ lange Eindringzeiten des Eindringmittels einzuhalten. Dies ist erfindungsgemäß nicht erforderlich, da die Eintrocknungszeit in der Regel relativ gering ist und hier die Eintrocknungszeit der Eindringzeit entspricht. Insbesondere wenn nach bevorzugter Ausführungsform der Erfindung Eindringmittel mit niedrigem Flammpunkt bzw. Eindringmittel, die ein Lösemittel mit niedrigem Siedepunkt aufweisen, eingesetzt werden, erfolgt das Eintrocknen des Eindringmittels relativ rasch. Das erfindungsgemäße Verfahren ist auch deshalb einfacher durchführbar als das bekannte Verfahren, weil der Eintrocknungszeitpunkt des Eindringmittels das Ende der Eindringzeit festlegt und somit einfach feststellbar ist, zu welchem Zeitpunkt mit der Zwischenreinigung begonnen werden kann. Dadurch, dass erfindungsgemäß ein Eintrocknen des Eindringmittels erwünscht ist, kann das Verfahren auch bei relativ hohen Temperaturen, nämlich bis zu 100° C und darüber hinaus noch funktionssicher durchgeführt werden.

Nach dem Aufbringen des Eindringmittels auf die ungereinigte Werkstoffoberfläche dringt das Eindringmittel in die zur Werkstoffoberfläche offenen Oberflächenfehler ein und dabei werden auch die in den Oberflächenfahlern verbliebenen Verunreinigungen von dem Eindringmittel durchsetzt. Mit anderen Worten werden die Verästelungen eines Verunreinigungslabyrintes, beispielsweise aus Schmutz und Fett, von dem Eindringmittel durchsetzt. Ein effektives Eindringen wird erfindungsgemäß dadurch gefördert, dass ein Eindringmittel eingesetzt werden kann, das Flammpunkte unterhalb von 60° C aufweist bzw. dessen Lösemittel einen verhältnismäßig geringen Siedepunkt aufweist. Ein solches Eindringmittel besitzt in der Regel auch eine relativ geringe Viskosität, so dass ein sehr wirksames Eindringen in die Oberflächenfehler bzw. auch in die Verunreinigungen der Oberflächenfehler möglich ist. Die in den Oberflächenfehlern verbliebenen Verunreinigungen wie Schmutz und Fette werden im Übrigen durch die Lösemittel des Eindringmittels angelöst und auch auf diese Weise sehr effektiv mit dem Farbstoff und/oder dem fluoreszierenden Stoff durchsetzt. Beim anschließenden Eintrocknen des Eindringmittels verdunstet das Lösemittel und der Farbstoff und/oder der fluoreszierende Stoff bleibt in den Oberflächenfehlern zurück. Der Erfindung liegt weiterhin die Erkenntnis zugrunde, dass bei der anschließenden Zwischenreinigung der Werkstoffoberfläche der Farbstoff und/oder der fluoreszierende Stoff sehr vollständig in den Oberflächenfehlern verbleibt und kaum ausgewaschen wird. Hierzu tragen die in den Oberflächenfehlern verbliebenen Verunreinigungen bei, da der Farbstoff und/oder der fluoreszierende Stoff in den Verästelungen eines Verunreinigungslabyrintes sehr wirksam zurückgehalten wird. Beim anschließenden Aufbringen des Entwicklers auf die Werkstoffoberfläche sind somit noch genügend Anteile des Farbstoffes und/oder fluoreszierenden Stoffes in den Oberflächenfehlern enthalten, so dass eine sehr effektive Markierung der Oberflächenfehler möglich ist. Die Oberflächenfehler sind bei der anschließenden Lichtinspektion wesentlich besser zu erkennen als bei dem eingangs beschriebenen bekannten Verfahren. Es wird eine sehr scharfe Fehleranzeige erhalten und diese Anzeigen bzw. Markierungen bluten auch nach längerer Zeit nicht aus. Auch relativ kleine Oberflächenfehler, beispielsweise mit einer Breite unter 0,5 µm und einer Tiefe unter 40 µm, werden bei der Lichtinspektion ohne weiteres sichtbar. Die mit dem erfindungsgemäßen Verfahren erzielten Oberflächenfehlermarkierungen können in der Regel ohne Hilfsmittel, beispielsweise ohne Vergrößerungsgeräte, erkannt werden. Selbst bei mehrfacher Wiederholung des Entwicklerauftrags ist die Markierung der Oberflächenfehler noch gut sichtbar.

Besonders vorteilhaft ist die Ausführungsform des erfindungsgemäßen Verfahrens, bei der das Eindringmittel Lebensmittelfarbstoff enthält. Nach dieser Ausführungsform kann besonders umweltverträglich gearbeitet werden. - Fernerhin weist auch eine Ausführungsform des erfindungsgemäßen Verfahrens besondere Vorteile auf, bei der eine Zwischenreinigung mit einem Lösemittel durchgeführt wird, das einen verhältnismäßig geringen Siedepunkt aufweist. Nach der Zwischenreinigung wird das verunreinigte Lösemittel vorzugsweise einer Destillation zugeführt und das Lösemittel kann wieder abgetrennt werden. Anschließend kann dann das reine Lösemittel entweder wieder als flüssiges Reinigungsmittel bei der Zwischenreinigung eingesetzt werden oder aber das reine Lösemittel wird als Lösemittel für das Eindringmittel eingesetzt.

Nachfolgend wird die Erfindung anhand einer lediglich ein Ausführungsbeispiel darstellenden Zeichnung näher erläutert. Es zeigen in schematischer Darstellung:
- **Fig. 1**: Prüfwerkstoffe nach der Durchführung des aus dem Stand der Technik bekannten Verfahrens, und
- **Fig. 2**: die Gegenstände gemäß Fig. 1 nach der Durchführung des erfindungsgemäßen Verfahrens.

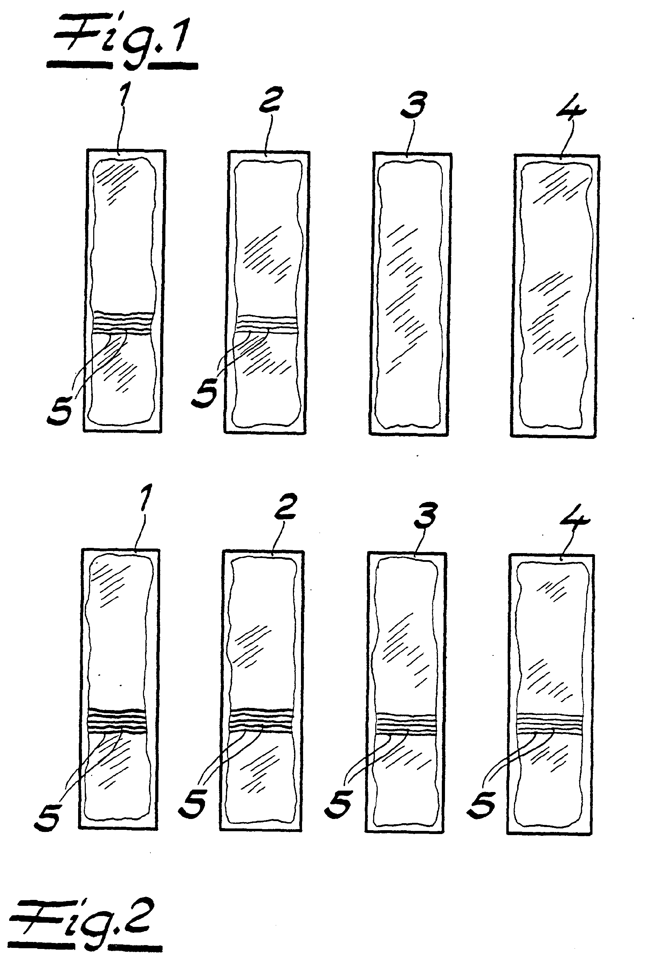

In den Fig. 1 und 2 sind vier Prüfbleche 1, 2, 3 und 4 als Prüfwerkstoffe dargestellt. Quer zur Längsrichtung dieser Prüfbleche 1, 2, 3 und 4 verlaufen als Risse ausgebildete Oberflächenfehler. Die Breite der Risse (in Längsrichtung der Prüfbleche 1, 2, 3, 4) nimmt vom Prüfblech 1 zum Prüfblech 4 hin ab.

Die Prüfbleche 1, 2, 3 und 4 nach Fig. 1 wurden nach dem aus dem Stand der Technik bekannten Verfahren behandelt. Nach dem Vorreinigen und Trocknen der Prüfbleche 1, 2, 3 und 4 wurde ein Farb-Eindringmittel aufgetragen und während eines Eindringzeitraumes von 15 Min. auf der Werkstoffoberfläche belassen. Dabei wurde darauf geachtet, dass das Eindringmittel nicht auf den Prüfblechen 1, 2, 3 und 4 eintrocknet. Daraufhin wurde eine Zwischenreinigung der Werkstoffoberflächen der Prüfbleche 1, 2, 3 und 4 durchgeführt. Anschließend wurden die Werkstoffoberflächen getrocknet und danach ein Entwickler auf die Werkstoffoberflächen aufgebracht. Daraufhin wurde eine Lichtinspektion der Werkstoffoberflächen bei Tageslicht durchgeführt. Fig. 1 zeigt das Ergebnis dieser Lichtinspektion. Lediglich an den Prüfblechen 1 und 2 mit den breiteren Rissen sind Oberflächenfehlermarkierungen 5 erkennbar, die dem Verlauf der Risse entsprechen. Auf den Prüfblechen 3 und 4 mit den geringeren Rissbreiten sind Oberflächenfehlermarkierungen gar nicht erkennbar.

Fig. 2 zeigt die Prüfbleche 1, 2, 3 und 4 nachdem sie mit dem erfindungsgemäßen Verfahren behandelt wurden. Zunächst wurde ein Farb-Eindringmittel auf die ungereinigte Werkstoffoberfläche aufgebracht und anschließend wurde abgewartet, bis das Farb-Eindringmittel eingetrocknet war. Erst daraufhin wurde die Zwischenreinigung der Werkstoffoberfläche durchgeführt und anschließend die Werkstoffoberfläche erneut getrocknet. Danach wurde der Entwickler auf die Werkstoffoberfläche aufgebracht und anschließend eine Lichtinspektion bei Tageslicht durchgeführt. Fig. 2 zeigt das Ergebnis dieser Lichtinspektion. Alle vier Prüfbleche 1, 2, 3 und 4 zeigen überraschend deutliche Oberflächenfehlermarkierungen 5. Dies gilt auch für die Prüfbleche 3 und 4 mit den geringeren Rissbreiten. Die Oberflächenmarkierungen der Prüfbleche 1 und 2 sind im Übrigen wesentlich deutlicher sichtbar und wesentlich ausgeprägter als die Oberflächenfehlermarkierungen der Prüfbleche 1 und 2 nach Fig. 1. Ein Vergleich der Fig. 1 und 2 verdeutlicht, dass mit dem erfindungsgemäßen Verfahren eine wesentlich bessere und effektivere Anzeige bzw. Markierung der Oberflächenfehler möglich ist.

## Patentansprüche

1. Verfahren zum Nachweis von Oberflächenfehlern in Werkstoffoberflächen, insbesondere in Werkstoffoberflächen von metallischen Werkstoffen,
wobei ein Eindringmittel auf die Werkstoffoberfläche aufgebracht wird,
wobei anschließend die Werkstoffoberfläche getrocknet wird,
wobei daraufhin eine Zwischenreinigung der Werkstoffoberfläche mit zumindest einem flüssigen Reinigungsmittel durchgeführt wird und wobei anschließend die Werkstoffoberfläche erneut getrocknet wird,
wobei danach zumindest ein Entwickler auf die Werkstoffoberfläche aufgebracht wird und wobei anschließend eine Lichtinspektion der Werkstoffoberfläche durchgeführt wird,
**dadurch gekennzeichnet dass** die Werkstaffoberfläche ohne chemische Vorreinigung behandelt wird, so dass Verunreinigungen in den Oberflächenfehlern verbleiben, und das Eindringmittel auf die ungereinigte Werkstoffoberfläche aufgebracht wird, so dass in den Oberflächenfehlern verbleibende Verunreinigungen von dem Eindringmittel durchsetzt werden.

2. Verfahren nach Anspruch 1, wobei ein Farb-Eindringmittel und/oder ein fluoreszierendes Eindringmittel eingesetzt wird.

3. Verfahren nach einem der Ansprüche 1 oder 2, wobei zur Zwischenreinigung der Werkstoffoberfläche Wasser und/oder ein Lösemittel als flüssiges Reinigungsmittel verwendet wird.

4. Verfahren nach einem der Ansprüche 1 bis 3, wobei der Entwickler auf die Werkstoffoberfläche aufgesprüht wird.

5. Verfahren nach einem der Ansprüche 1 bis 4, wobei als Entwickler eine Lösung und/oder eine Suspension aus Wasser und/oder aus zumindest einem Lösemittel und aus zumindest einem anorganischen Weißpigment eingesetzt wird.

6. Verfahren nach einem der Ansprüche 1 bis 5, wobei die Lichtinspektion bei Tageslicht und/oder unter UV-Strahlung durchgeführt wird.

## Claims

1. A method for detecting surface defects in material surfaces, in particular in material surfaces of metallic materials, wherein a penetrating means is applied to the material surface, wherein the material surface is then dried, wherein an intermediate cleaning of the material surface is then effected using at least one liquid cleaning agent and wherein the material surface is then dried anew, wherein at least one developer is thereafter applied to the material surface and wherein a light inspection of the material surface is then carried out, **characterised in that** the material surface is treated without chemical pre-cleaning so that impurities remain in the surface defects and the penetrating means is applied to the non-cleaned material surface so that impurities remaining in the surface defects are penetrated by the penetrating means.

2. The method according to claim 1, wherein a dye penetrating means and/or a fluorescent penetrating means is used.

3. The method according to one of claims 1 or 2, wherein water and/or a solvent is used as liquid cleaning agent for the intermediate cleaning of the material surface.

4. The method according to any one of claims 1 to 3, wherein the developer is sprayed onto the material surface.

5. The method according to any one of claims 1 to 4, wherein a solution and/or a suspension of water and/or at least one solvent and at least one inorganic white pigment is used as developer.

6. The method according to any one of claims 1 to 5, wherein the light inspection is carried out in daylight and/or under UV radiation.

## Revendications

1. Procédé de détection de défauts de surfaces dans des surfaces de matériaux, en particulier des surfaces de matériaux métalliques, dans lequel
- un agent de pénétration est appliqué sur la surface du matériau,
- la surface du matériau est ensuite séchée,
- un nettoyage intermédiaire de la surface du matériau est ensuite réalisé avec au moins un détergent liquide, puis la surface du matériau est de nouveau séchée,
- au moins un révélateur est ensuite appliqué sur la surface du matériau, à la suite de quoi s'effectue une inspection lumineuse de la surface du matériau,
**caractérisé en ce que**
la surface du matériau est traitée sans prénettoyage chimique, de sorte que des impuretés subsistent dans les défauts de surface, et l'agent de pénétration est appliqué sur la surface non nettoyée du matériau, de sorte que des impuretés résiduelles dans les défauts de surface sont contenues dans l'agent de pénétration.

2. Procédé suivant la revendication 1, dans lequel est utilisé un agent de pénétration coloré et/ou un agent de pénétration fluorescent.

3. Procédé suivant l'une des revendications 1 et 2, dans lequel sont utilisés de l'eau et/ou un solvant en tant que détergent liquide pour le nettoyage intermédiaire de la surface du matériau.

4. Procédé suivant l'une des revendications 1 à 3, dans lequel le révélateur est pulvérisé sur la surface du matériau.

5. Procédé suivant l'une des revendications 1 à 4, dans lequel une solution et/ou une suspension d'eau et/ou d'au moins un solvant et d'au moins un pigment blanc inorganique sont mises en oeuvre en tant que révélateur.

6. Procédé suivant l'une des revendications 1 à 5, dans lequel l'inspection lumineuse s'effectue à la lumière du jour et/ou sous rayonnement UV.
